# EUROPEAN PATENT SPECIFICATION

(11) **EP 2 604 496 B1**
(45) Date of publication and mention of the grant of the patent: **11.09.2024**
(21) Application number: 12196424.1
(22) Date of filing: 11.12.2012
(51) Int. Cl.: B60K 15/07, B60L 50/71, B62J 1/12, B62J 45/41, B62J 45/40, B62K 11/10, B62J 35/00

(54) **SMALL VEHICLE**
KLEINES FAHRZEUG
VÉHICULE DE PETITE TAILLE

(30) Priority: 12.12.2011 JP 2011271731
(43) Date of publication of application: 19.06.2013
(73) Proprietor: Suzuki Motor Corporation, Shizuoka-ken 432-8611 (JP)
(72) Inventor: Natsuizaka, Hitoshi, Shizuoka-Ken, 432-8611 (JP); Iida, Kazuhiro, Shizuoka-Ken, 432-8611 (JP)
(74) Representative: Klunker IP Patentanwälte PartG mbB

(56) References cited:
- EP-A1- 2 042 414
- EP-A1- 2 253 530
- DE-A1- 102006 053 961
- US-A1- 2008 236 914

## Description

### BACKGROUND OF THE INVENTION

### Field of the Invention

The present invention relates to a small vehicle, with a seat structure, which runs on power produced using a gas.

EP2253530A discloses a small vehicle (scooter) of his type.

In a motorcycle powered by a gas fuel, for example, as typified by fuel cells, especially, in a scooter-type vehicle, there exists a space under a seat so as to be surrounded by a vehicle body cowl (i.e., cowling), and in the space, a gaseous fuel reactor (reacting unit), a fuel tank, fuel supply components, and other components related to the gaseous fuel reactor are placed. Such arrangement desirable in terms of protection of the components or parts of the vehicle, but if a gas whose specific gravity is lower than air is used as fuel, when the gas fuel gets released or leaked for reasons of equipment protection, a piping failure, or the like, the gas fuel is blocked by the vehicle body cowling and is not discharged through surroundings. Therefore, there causes a fear such that the gas fuel might stay in upper portion of the space under the seat (the under-seat region) by being blocked by a bottom surface of the located at the upper portion thereof.

A vehicle mounted with such components is provided with a gas fuel concentration measuring sensor, which is designed to detect any leakage of the gas fuel by placing the gas fuel concentration measuring sensor above the components related to the gaseous fuel reactor, i.e., in the under-seat region, to inform the rider of the leakage and to activate a safety device.

Incidentally, with a seat structure for a motorcycle such as disclosed in Japanese Patent Laid-Open Publication No. 2004-237936 (Patent Document 1), in which a plurality of substantially dome-shaped spaces are formed under a lower surface (i.e., undersurface) of a seat base of the seat. Accordingly, if the vehicle is powered by gas fuel as described above, a leak gas fuel (this term "leak" may be readable in this disclosure as "leaking" or "leaked" gas fuel) will stay in the respective substantially dome-shaped spaces in a dispersed manner. Furthermore, since reinforcement ribs are arranged in a lattice pattern on the lower surface of the seat base, a large number of square depressions or recesses are formed on the lower surface of the seat base, and consequently, the leak gas fuel will also stay in the depressions in a manner finely dispersed in the depressions in amount.

In a structure in which a gaseous fuel reactor is mounted on a vehicle having a seat structure such as described in the Patent Document 1, since the lower surface of the seat base of the seat has a complicated pattern of recess-and-protrusion (the substantially dome-shaped spaces, depressions, and the like), there is a fear, depending on an installation location of the gas fuel measuring sensor, of being difficult to detect the leak gas even if the leak gas fuel stays in the under-seat region.

In addition, there is a fear that the flow of the leak gas fuel along the lower surface of the seat base is obstructed by the reinforcement ribs arranged in a lattice pattern, making it difficult to discharge the gas fuel.

EP 2 253 530 A1 discloses a small vehicle according to the preamble of claim 1, in which a fuel cell and a fuel sensor are provided below the seat.

DE-A-10 2006 053961 discloses a motor cycle having a fuel cell for generating electric power which is used for driving the motor cycle. Also this prior art vehicle has a gas leakage sensor disposed below the seat. In this prior art vehicle, the lower surface of the seat has a plate barrier for introducing external air. A guide portion extends perpendicular to the plate barrier.

US-A-2008/0236914 discloses a motor cycle having a fuel cell below the seat, and a hydrogen sensor, mounted in the vicinity of hydrogen cylinders which are disposed to the rear part of the vehicle body.

### SUMMARY OF THE INVENTION

The present invention has been made in view of the above circumstances and an object thereof is to provide a seat structure for a small vehicle, such as motorcycle, capable of detecting and discharging leak gas fuel staying in an under-seat region with high reliability and precision. The above and other objects can be achieved according to the present invention by providing the features of claim 1.

According to the present invention, since the gas fuel sensor is disposed in the depression of the seat, the depression being formed by being surrounded at least by the seat base, if the gas fuel leaks and stays in the depression, the staying gas fuel can be led to the gas fuel sensor. Accordingly, any leakage of the gas fuel can be detected reliably by the gas fuel sensor.

In addition, since the gas fuel leaked from components related to the gaseous fuel reactor stays in the depression of the openable/closable seat, if the seat is opened at the time of gas fuel leakage, the leak (leaking or leaked) gas fuel can be reliably discharged out of the vehicle.

The nature and further characteristic features of the present invention will be made clearer from the following description made with reference to embodiments shown in the accompanying drawings.

### BRIEF DESCRIPTION OF THE DRAWINGS

Fig. 1 is a left side view illustrating a scooter-type motorcycle to which a seat structure for a small vehicle (i.e., scooter-type motorcycle) according to a first embodiment of the present invention is applied;
Fig. 2 is a left side view illustrating a body frame structure, components related to the fuel cell stack, and the like of the scooter-type motorcycle shown in Fig. 1;
Fig. 3 is a view taken in a direction of arrow III in Fig. 2;
Fig. 4 is a longitudinal sectional view showing a rear side portion of the scooter-type motorcycle shown of Fig. 1;
Fig. 5 is a plan view, in an enlarged scale, showing the rear side portion of the scooter-type motorcycle of Fig. 1 with a double seat saddle being removed;
Fig. 6 is a perspective view, in an enlarged scale, showing a gas fuel sensor of Figs. 4 and 5 and surroundings thereof;
Fig. 7 is a sectional view taken along the line VII-VII in Fig. 5;
Fig. 8 is a sectional view taken along the line VIII-VIII in Fig. 5;
Figs. 9A and 9B are a plan view and side view, respectively, showing the double seat saddle of Fig. 1;
Fig. 10 is a view taken in a direction of an arrow X in Fig. 9A;
Fig. 11 is a view taken in a direction of an arrow XI in Fig. 9B;
Fig. 12 is a sectional view taken along the line XII-XII in Fig. 11;
Fig. 13 is a sectional view taken along the line XIII-XIII in Fig. 11;
Fig. 14 is a bottom view corresponding to Fig. 11 and showing a double seat saddle of a scooter-type motorcycle to which a seat structure for a small vehicle (i.e., scooter-type motorcycle) according to a second embodiment of the present invention is applied;
Fig. 15 is a view taken in a direction of an arrow XV in Fig. 14;
Fig. 16 is a sectional view taken along the line XVI-XVI in Fig. 14;
Fig. 17 is a sectional view taken along the line XVII-XVII in Fig. 16; and
Fig. 18 is a sectional view taken along the line XVIII-XVIII in Fig. 16.

### DESCRIPTION OF THE PREFERRED EMBODIMENT

Embodiments of the present invention will be described hereunder with reference to the accompanying drawings. Further, it is to be noted that in the following descriptions, terms of "front/rear," "left/right," and "up/down"(vertical) are used in an illustrated states or in a state of a driver riding on the vehicle.

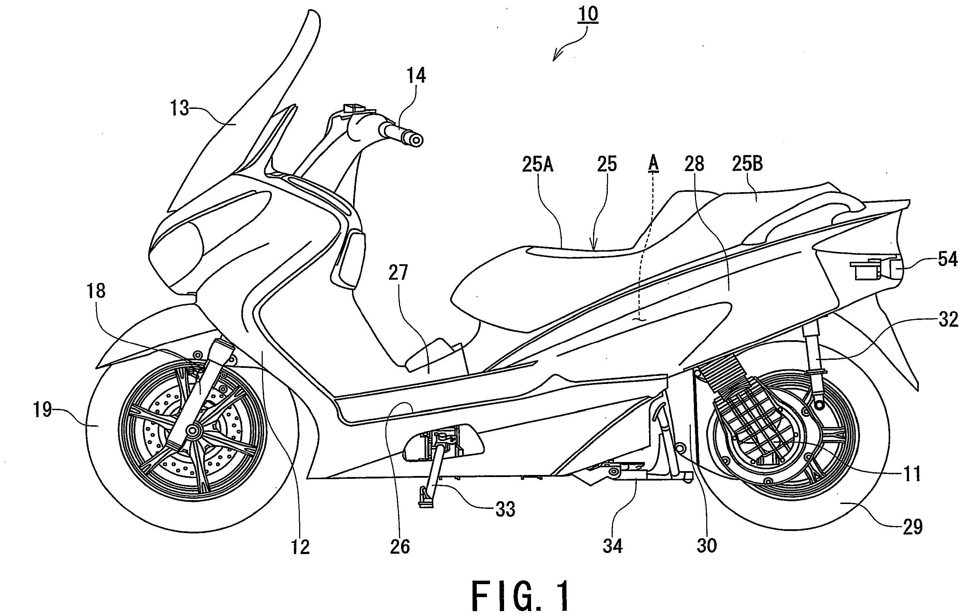

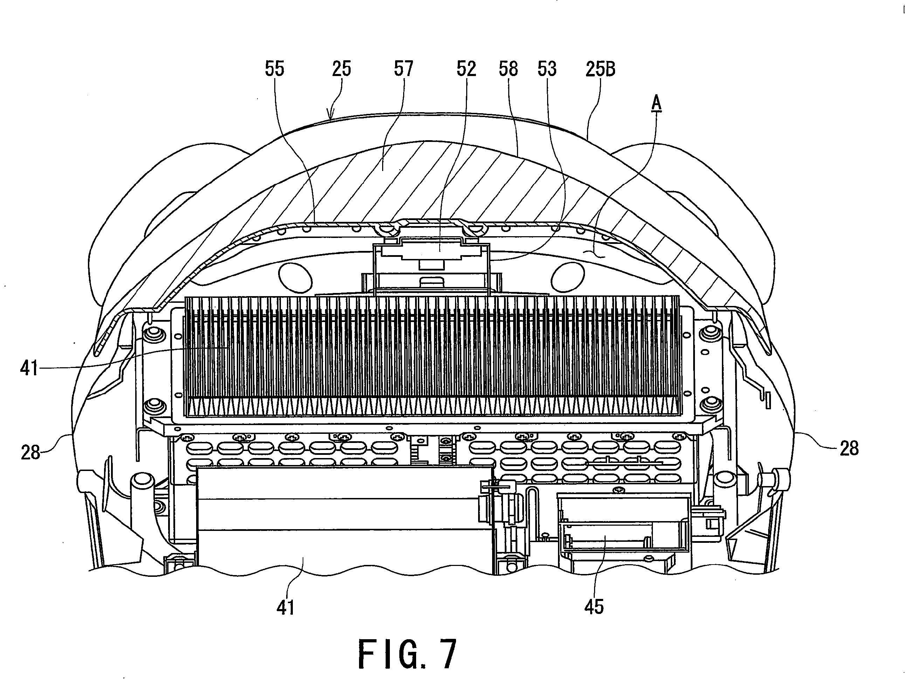

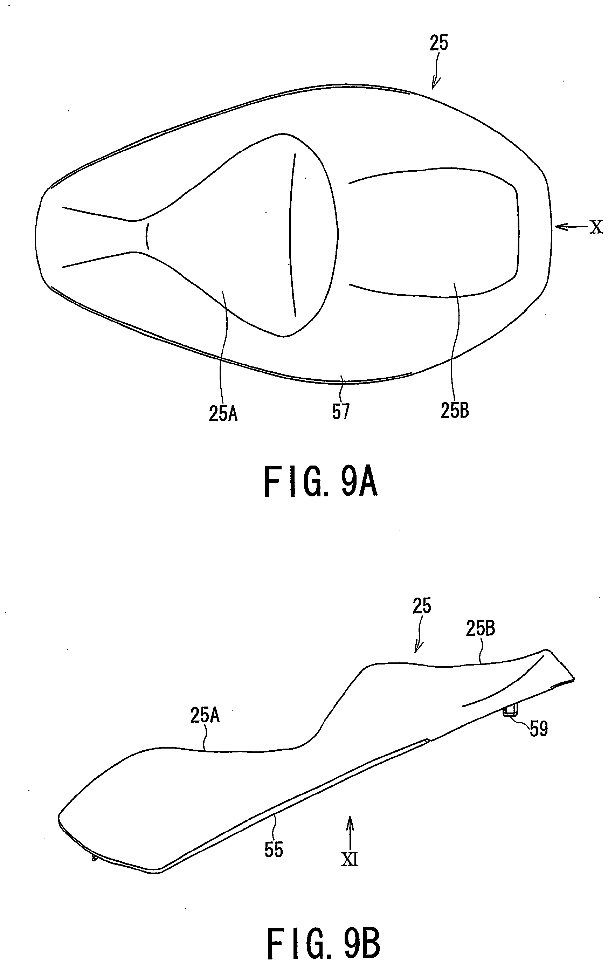

### [First Embodiment (Figs. 1 to 13)]

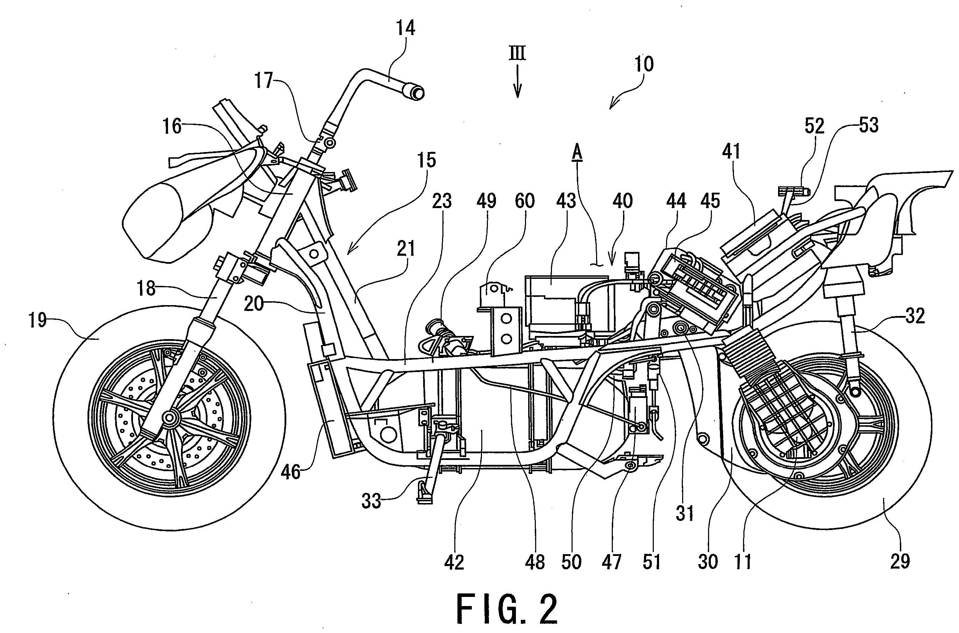

First, with reference to Figs. 1 and 2 showing a left side view of a scooter-type motorcycle, provided with a body frame, components related to the fuel cell stack, and the like, to which a seat structure for a small vehicle according to a first embodiment of the present invention is applied.

A scooter-type motorcycle 10 which is a small vehicle, i.e., scooter-type motorcycle, according to the present embodiment uses a fuel cell stack as a gaseous fuel reactor and runs by rotating a motor 11 using electric power obtained by a fuel cell drive system 40 described later (Fig. 2). As shown in Fig. 1, the scooter-type motorcycle 10 includes a leg shield 12, a screen 13, and a handle bar 14, which protrude in left and right sides in a front portion of the vehicle. It is further to be noted that the terms "vehicle" and "vehicle body" may be equivalently used herein.

The handle bar 14 is coupled integrally and rotatably to a steering shaft 17 pivotably supported by a head pipe 16 of a vehicle body frame 15 shown in Fig. 2. A front wheel 19 is suspended on the steering shaft 17 via a pair of right and left front forks 18. As the steering shaft 17 is pivotably supported by the head pipe 16 so as to be turnable left and right, the front wheel 19 is turned left and right when the handle bar 14 is operated.

As shown in Fig. 2, the vehicle body frame 15 has the head pipe 16 in a front end portion thereof, and a pair of front and rear down tubes 20 and 21 extend downward from lower and upper portions of the head pipe 16. The lower portion of the front down tube 20 bends rearward, then extends rearward, and then bends upward in approximately intermediate portion in a front-rear (longitudinal) direction of the vehicle body. Furthermore, a pair of left and right main tubes 23 extend rearward from an approximate center position of the front down tube 20 in a vertical direction. The main tubes 23 are connected with a lower end portion of the rear down tube 21 as well as with a rear end portion of the front down tube 20.

As shown in Fig. 1, the scooter-type motorcycle 10 has a double seat saddle 25 for two riders arranged behind the leg shield 12 that is located in the front portion of the vehicle.

A pair of left and right flat-plate foot boards 26 extends over a range from the leg shield 12 to the double seat saddle 25 to allow riders (driver and pillion passenger) sitting on the double seat saddle 25 to put their feet on. Further, a center tunnel cover 27 is provided in this range. The center tunnel cover 27 bulges upward between the pair of left and right foot boards 26, being installed behind the leg shield 12 in such a way as to be continuous to the leg shield 12.

Under the double seat saddle 25, a rear cover 28 serving as a vehicle body cowl (cowling) is installed behind the center tunnel cover 27 in such a way as to be continuous to the center tunnel cover 27. The rear cover 28 is designed to cover an under-seat region A located under the double seat saddle 25 in rear side portion of the vehicle. Specifically, the rear cover 28 covers the main tubes 23 and front down tube 20, and the like of the vehicle body frame 15 as well as most of the components related to the fuel cell stack of the fuel cell drive system 40 (including a fuel cell stack 41, a fuel tank 42, a rechargeable battery 43, a power controller 44, and a motor controller 45 described later), which are disposed in the under-seat region A.

A swing arm 30 equipped with a motor 11 adapted to drive a rear wheel 29 is pivotally supported under the rear cover 28 so as to be vertically swingable around a pivot 31 of the main tubes 23 shown in Fig. 2 as a fulcrum. A reaction unit 32 is disposed so as to bridge between the swing arm 30 and main tubes 23. The motor 11 and rear wheel 29 are suspended in a manner that the vertical swing thereof is dampened by the reaction unit 32.

Incidentally, in Fig. 2, reference numeral 33 denotes a side stand and reference numeral 34 in Fig. 1 denotes a center stand.

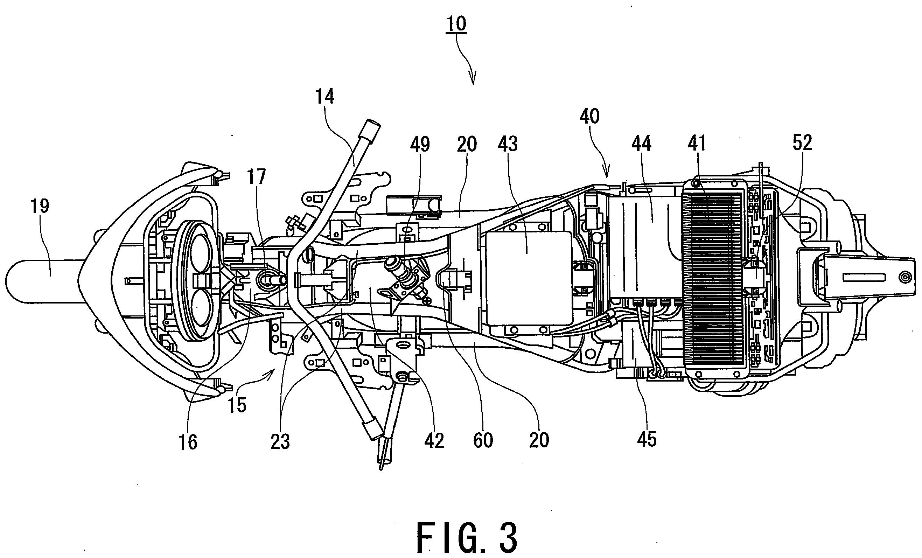

As shown in Figs. 2 and 3, the fuel cell drive system 40 includes components related to the fuel cell stack such as a fuel cell stack 41, a fuel tank 42, a rechargeable battery (driving battery) 43, a power controller 44, a motor controller 45, a vehicle controller 46 and so on.

Among the components mentioned above, the fuel tank 42 is surrounded and supported by the pair of left and right main tubes 23 and front down tube 20 and housed in a region from the inside of the center tunnel cover 27 to the lower portion of the under-seat region A in the rear cover 28. Further, the rechargeable battery 43, the power controller 44, the motor controller 45 and the fuel cell stack 41 are also housed in the upper portion of the under-seat region A in the rear cover 28 in a manner of being supported by the main tubes 23. In the under-seat region A, the rechargeable battery 43, the power controller 44 and the fuel cell stack 41 are arranged in this order from the front side of the vehicle body, and the motor controller 45 is disposed, for example, on a left flank of the power controller 44. Furthermore, the vehicle controller 46 is housed in the leg shield 12 in a manner of being supported by the lower portion of the front down tube 20.

The fuel tank 42 stores a gas fuel having a specific gravity lower than that of air, such as hydrogen in a gas state, under high pressure. A main stop valve 47 is attached to an outlet portion of the fuel tank 42, and a fuel filling port 49 is connected to the main stop valve 47 via a filler pipe 48. The fuel filling port 49 is positioned in the center tunnel cover 27 mounted on the main tubes 23. A high-pressure gas fuel (gaseous hydrogen) is injected through the fuel filling port 49, filling the fuel tank 42 through the filler pipe 48 and the main stop valve 47.

The main stop valve 47 is connected with a pressure-regulating valve 50, which in turn is connected to the fuel cell stack 41 via a secondary pressure reducing valve 51. The high-pressure gas fuel (gaseous hydrogen) in the fuel tank 42 is depressurized by the pressure-regulating valve 50 via the main stop valve 47 and then supplied to the fuel cell stack 41 through a secondary pressure reducing valve 51. The main stop valve 47, the filler pipe 48 and the pressure-regulating valve 50, mentioned hereinbefore, are disposed at the lower portion of the under-seat region A in the rear cover 28 as with the fuel tank 42. The secondary pressure reducing valve 51 is arranged in a portion from the lower portion to the upper portion of the under-seat region A.

The fuel cell stack 41 generates electric power through chemical reaction of the gas fuel (gaseous hydrogen) supplied from the fuel tank 42 and oxygen contained in air. A moist exhaust gas produced as a result of the chemical reaction is discharged through an exhaust port 54 (Fig. 1). According to the present embodiment, the fuel cell stack 41 is disposed under a passenger seat portion 25B (described later) of the double seat saddle 25 shown in Fig. 1.

The rechargeable battery 43 stores excess electric power produced by the fuel cell stack 41 or feeds the stored electric power to the motor 11 via the motor controller 45. Further, the power controller 44 controls generated output of the fuel cell stack 41, and stores the excess electric power produced by the fuel cell stack 41 in the rechargeable battery 43 or feeds the electric power stored in the rechargeable battery 43 to the motor 11 via the motor controller 45. Furthermore, the motor controller 45 controls the operation of the motor 11. The rechargeable battery 43, the power controller 44 and the motor controller 45 are arranged under a rider seat portion 25A (described later) of the double seat saddle 25 shown in Fig. 1.

The vehicle controller 46 is designed to control the operation of the scooter-type motorcycle 10 equipped with the fuel cell drive system 40.

That is, when the scooter-type motorcycle 10 is running on a flat road at which a relatively small amount of electric power is required, the electric power generated by the fuel cell stack 41 is fed to the motor 11 from the power controller 44 through the motor controller 45 and excess electric power is stored in the rechargeable battery 43 from the power controller 44.

On the other hand, during acceleration or during running on an uphill slope at which a relatively large amount of electric power is required for the scooter-type motorcycle 10 to run, the vehicle controller 46 feeds the electric power generated by the fuel cell stack 41 to the motor 11 from the power controller 44 through the motor controller 45 and feeds the electric power stored in the rechargeable battery 43 from the power controller 44 to the motor 11 via the motor controller 45.

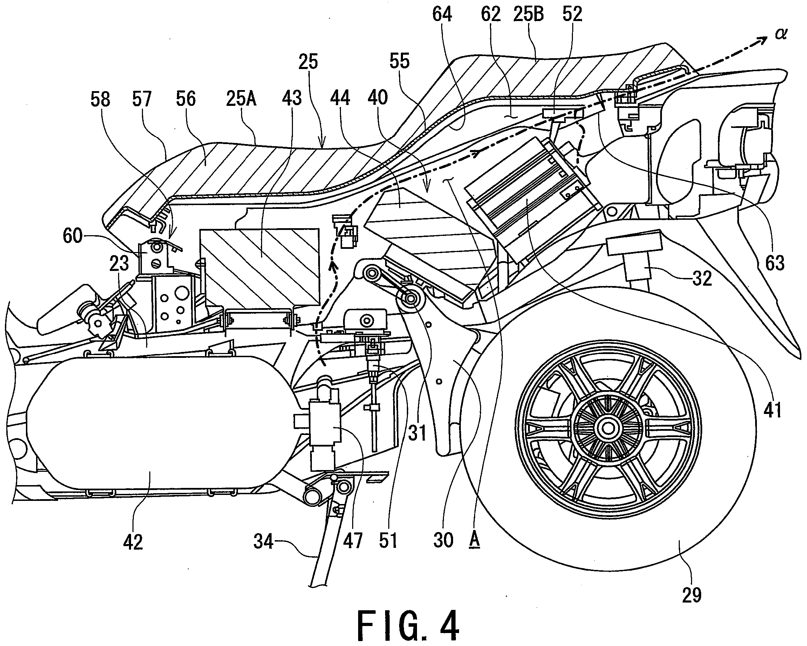

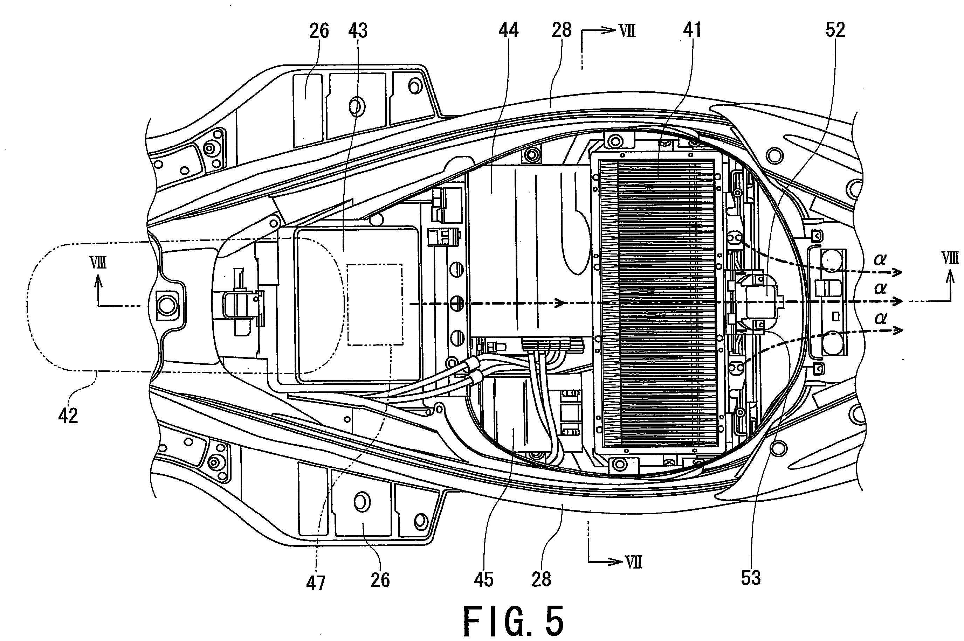

As shown in Figs. 4 and 5, in the under-seat region A which is an enclosed space located under the double seat saddle 25 and surrounded by the rear cover 28, if the gas fuel (gaseous hydrogen) leaks from a component related to the fuel cell stack such as the fuel cell stack 41 or fuel tank 42 of the fuel cell drive system 40, as indicated by arrow α, the gas fuel rises in the under-seat region A, flows toward the rear side of the vehicle body along a seat base 55 which is a bottom plate of the double seat saddle 25, and is discharged out of the vehicle from a portion near a rear end portion of the double seat saddle 25, and any leakage of the gas fuel is detected by a gas fuel sensor 52.

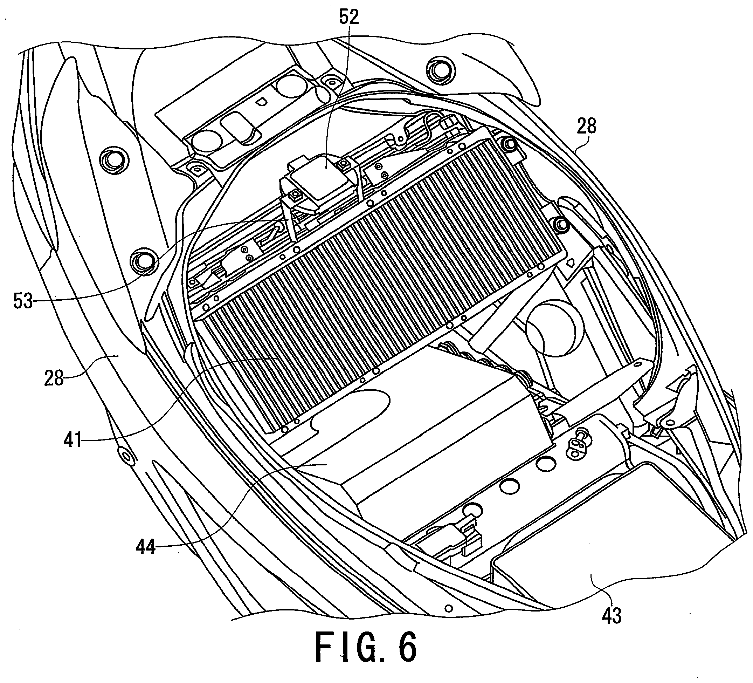

The gas fuel sensor 52 measures concentration of gas fuel (gaseous hydrogen) and detects the time (fact) when the leak gas fuel reaches or exceeds a predetermined concentration. As shown in Figs. 6 to 8, the gas fuel sensor 52 is fixedly mounted on the fuel cell stack 41 using a mounting bracket 53 at a position under the passenger seat portion 25B near the seat base 55 in the under-seat region A as described in detail hereinlater. If the leakage of the gas fuel is detected by the gas fuel sensor 52, the driver is informed to that effect and a safety device or the like is activated.

As shown in Figs. 1, 4 and 9, the double seat saddle 25 is located above the main tubes 23 and is made up of the rider seat portion 25A and passenger seat portion 25B formed integrally, where the rider seat portion 25A is positioned on a front side while the passenger seat portion 25B is positioned on a rear side.

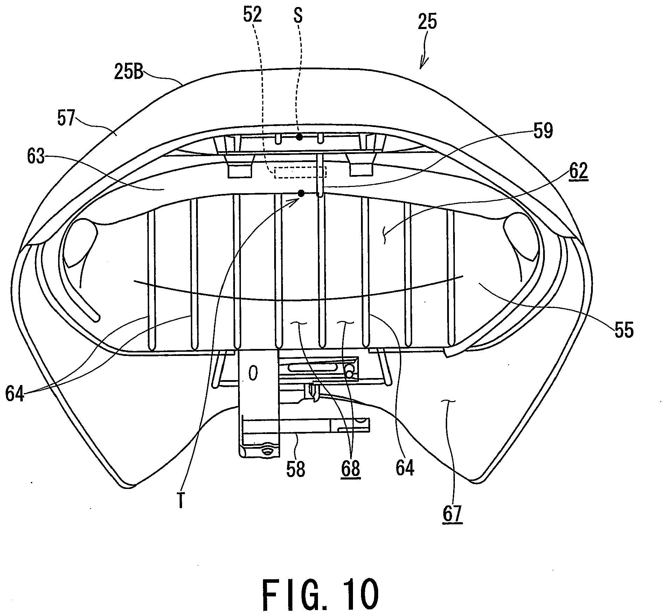

Furthermore, as shown in Figs. 10 to 13, the double seat saddle 25 is formed in such a manner as that a seat cushion 56 made, for example, of a urethane foam cushioning material is placed on a top surface of the seat base 55 which is a bottom plate formed, for example, of a synthetic resin and then a surface of the seat cushion 56 is covered with seat skin 57. The seat base 55 supports loads acting on the double seat saddle 25.

As shown in Figs. 4, 8 and 11, in the double seat saddle 25 configured as described above, a seat hinge 58 is installed in a front end portion of the seat base 55, and a seat striker 59 is installed in a rear end portion of the seat base 55 so as to protrude therefrom. As shown in Figs. 2 and 4, a hinge support bracket 60 is mounted so as to be stretched between the pair of left and right main tubes 23. Since the seat hinge 58 is pivotably supported by the hinge support bracket 60 in a turnable manner, the double seat saddle 25 can be supported to be opened or closed by the main tubes 23. When the double seat saddle 25 is closed, the seat striker 59 is restrained by a lock mechanism 61 mounted on the main tubes 23 and thereby prevents the double seat saddle 25 from opening unnecessarily.

Furthermore, as shown in Figs. 10 to 12, the seat base 55 of the double seat saddle 25 includes a lower bent portion 67 of the seat surrounded at least by the seat base 55 and intended to provide a larger space under the double seat saddle 25, and a substantially dome-shaped depression 62 is formed in a certain portion of the seat-lower bent portion 67. The seat-lower bent portion 67 is an upwardly recessed inner region located under the seat base 55 and provided with an outer edge which corresponds to a lower end portion of the double seat saddle 25. According to the present embodiment, the depression 62 has an upper contour defined by the seat base 55, and flanks defined by a defining portion 63. The defining portion 63 is formed integrally with the seat base 55 by protruding downward along the vehicle body from the seat base 55 and extending in a seat width direction (width direction of the vehicle) while being bent substantially in an arcuate (circular-arc) shape. Gas fuel leaked from the fuel cell stack 41 or another component related to the fuel cell stack rises in the under-seat region A, flows toward the rear part of the vehicle along the seat base 55 of the double seat saddle 25 and stays in the depression 62.

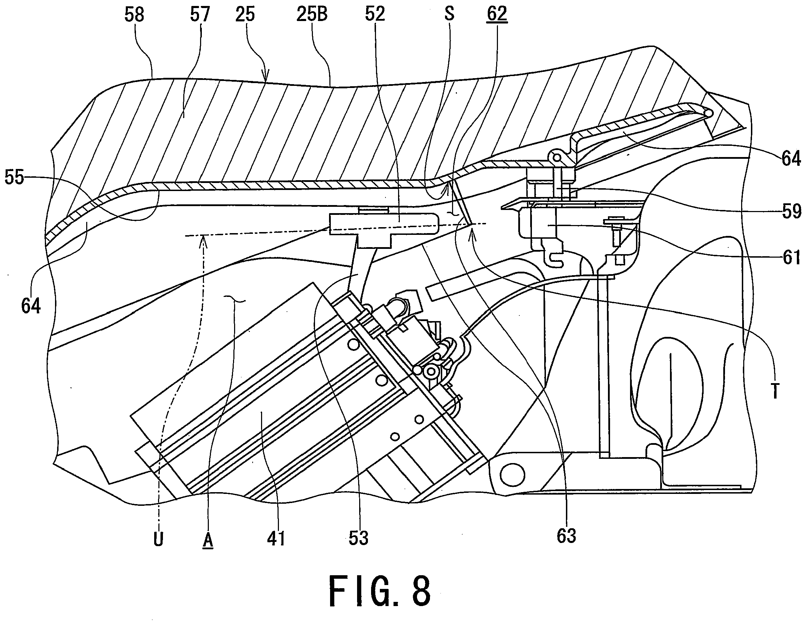

As described above, the gas fuel sensor 52 is mounted on the fuel cell stack 41, near the seat base 55 of the double seat saddle 25 in the under-seat region A, using the mounting bracket 53 as shown in Fig. 8, and more specifically, the gas fuel sensor 52 is disposed in the depression 62. Furthermore, if position of an uppermost point of the defining portion 63 is designated as point T, at least a part of (approximately an upper half portion in the present embodiment) the gas fuel sensor 52 is disposed above a horizontal line U passing through point T. According to such arrangement, the leak gas fuel staying in the depression 62 can be detected reliably by the gas fuel sensor 52. Incidentally, as shown in Fig. 10, an uppermost point S of the depression 62 is located at a center position in the seat width direction (width direction of the vehicle body).

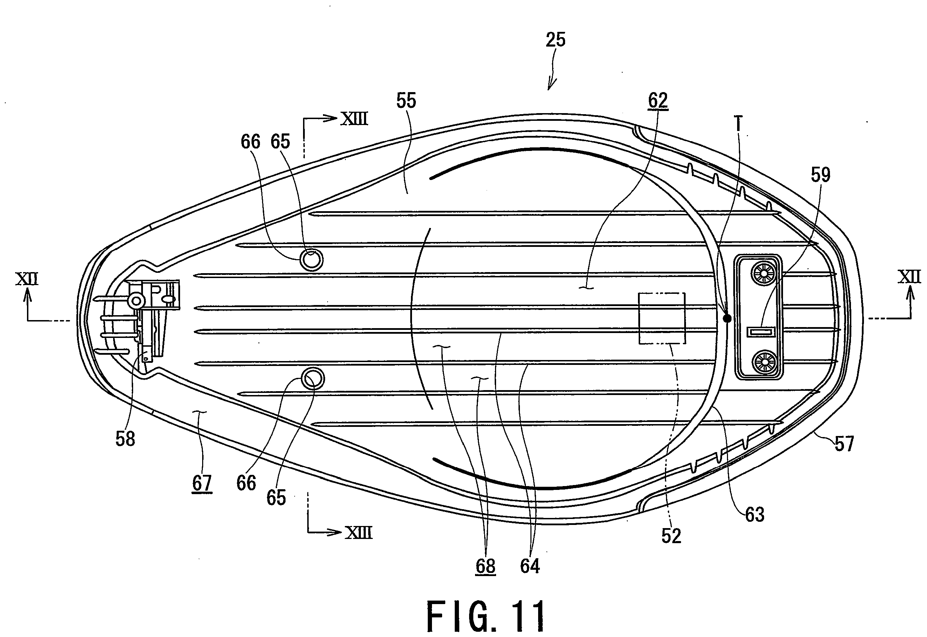

As shown in Figs. 11 to 13, a plurality of reinforcement ribs 64 are provided on the lower surface of the seat base 55 of the double seat saddle 25 in a manner of protruding in a front-rear direction of the seat (longitudinal direction of the vehicle). The reinforcement ribs 64 are arranged in the seat width direction (width direction of the vehicle) in parallel to each other without intersecting each other.

Since the reinforcement ribs 64 are formed on the seat base 55 in the manner described above, rigidity of the seat base 55 can be improved without obstructing the flow of the leak gas fuel along the lower surface of the seat base 55. In addition, since concave grooves 68 defined by the plural reinforcement ribs 64 are provided in continuous to a location site of the gas fuel sensor 52, it is possible to guide the leak gas fuel to the gas fuel sensor 52 along the concave grooves 68.

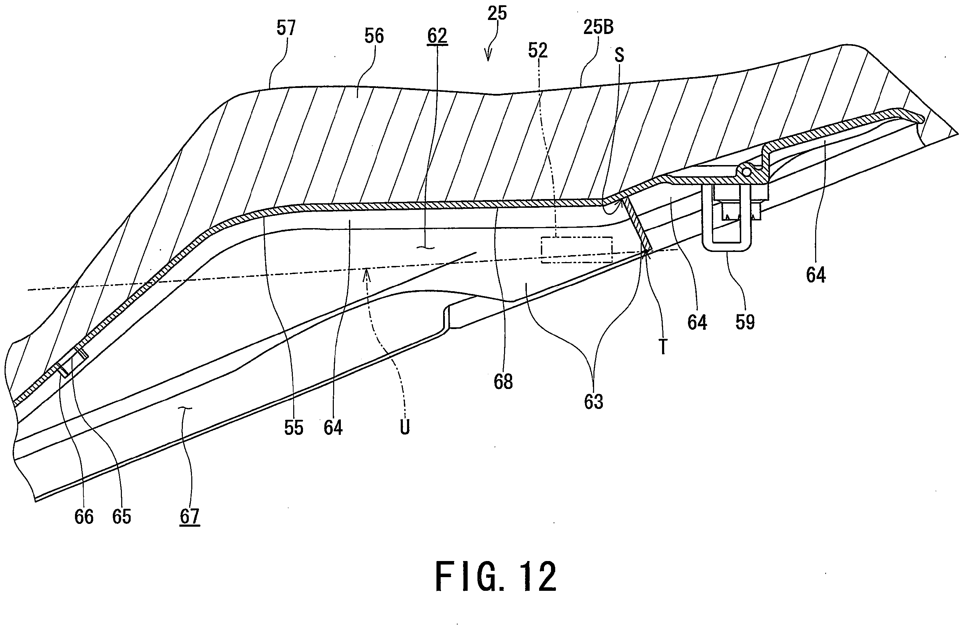

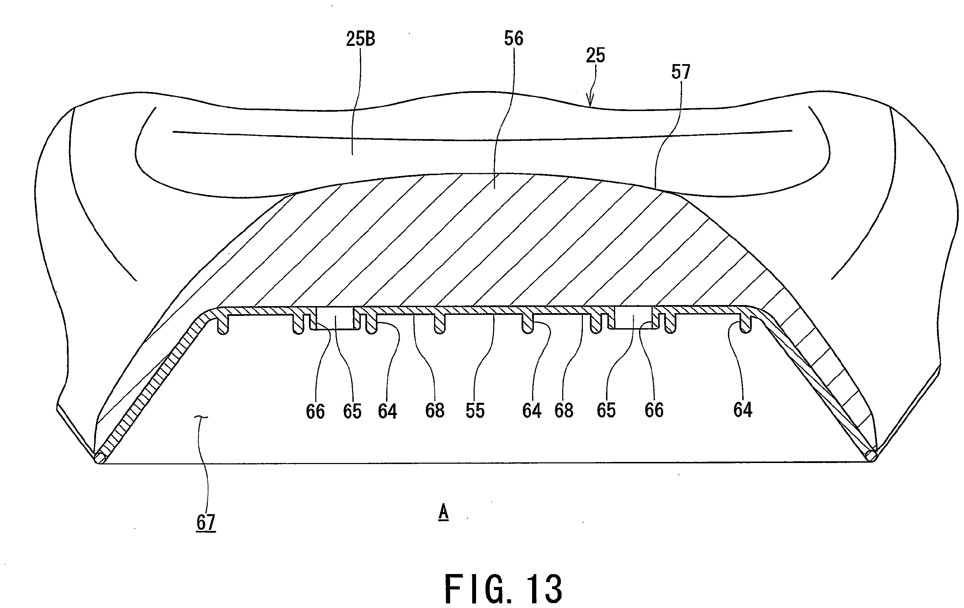

Furthermore, as shown in Figs. 11 and 13, in order to ensure a riding comfort and a ventilating performance, a communication hole 65 is formed in the seat base 55 of the double seat saddle 25 so as to establish the communication between an upper space of the seat base 55 in which the seat cushion 56 is provided and the under-seat region A located under the seat base 55. As shown in Fig. 12, the communication hole 65 is formed at a position lower than the point T of the defining portion 63 as viewed from a side of the vehicle to thereby form the communication hole 65 at a position where the leak gas fuel does not stay.

As shown in Fig. 13, edge (marginal) projections 66 are formed on a lower edge of the communication hole 65 so as to protrude downward along the vehicle body from the lower surface of the seat base 55. Accordingly, the leak gas fuel flowing along the lower surface of the seat base 55 of the double seat saddle 25 is blocked by the edge projections 66 and thereby kept from flowing into the communication hole 65.

The present invention of the configuration or structure described above provides the following advantages or effects (1) to (7).
(1) Since the gas fuel sensor 52 is placed in the depression (i.e., recess or recessed portion) 62 formed by being surrounded by the seat base 55 of the double seat saddle 25 and the defining portion 63, if gas fuel leaks from a component related to the fuel cell stack such as the fuel cell stack 41 or fuel tank 42 and stays in the depression, the staying gas fuel can be guided to the gas fuel sensor 52. Therefore, the leakage of gas fuel can be detected reliably by the gas fuel sensor 52.
(2) Since the gas fuel leaked from a component related to the fuel cell stack such as the fuel cell stack 41 or fuel tank 42 stays in the depression 62 of the openable/closable double seat saddle 25, if the double seat saddle 25 is opened at the time of gas fuel leaking, the leak (leaking or leaked) gas fuel can be reliably discharged out of the vehicle.
(3) Since the uppermost point S of the depression 62 formed on the seat base 55 of the double seat saddle 25 is set at approximate center position in the seat width direction (width direction of the vehicle) of the double seat saddle 25, the seat base 55 of the double seat saddle 25 and the seat cushion 56 can be shaped almost bilaterally symmetric. Accordingly, the rider does not feel a sense of discomfort when the rider sits on the double seat saddle 25 and run the motorcycle.
(4) Since the plural reinforcement ribs 64 are located on the seat base 55 of the double seat saddle 25 described above so as to protrude therefrom and the concave grooves 68 defined by the reinforcement ribs 64 are arranged in continuous to the installation site of the gas fuel sensor 52, it is possible to improve the rigidity of the seat base 55 without forming any square cell, which is surrounded completely on all four sides by ribs, would not be detected by the gas fuel sensor 52. Thus, the leak gas fuel is guided to the gas fuel sensor 52 by flowing through the concave grooves 68, eliminating the possibility of gas fuel staying scatteringly in square cells on the seat base 55 of the double seat saddle 25, and thereby avoiding the gas fuel detection miss.
(5) The plural reinforcement ribs 64, which are formed on the seat base 55 of the double seat saddle 25, extending substantially in the front-rear (longitudinal) direction of the double seat saddle 25 of the vehicle body in parallel to each other without intersecting each other, are substantially parallel to a flow path of the leak gas fuel flowing along the seat base 55 of the double seat saddle 25 in the under-seat region A. This arrangement facilitates the flow of leak gas fuel along the seat base 55 of the double seat saddle 25.
(6) Since the communication hole 65 formed in the seat base 55 of the double seat saddle 25 is located below the point T of the defining portion 63 which defines the depression 62 in a side view of the vehicle, the communication hole 65 can be formed in a region where the leak gas fuel will not stay. Thus, the formation of the communication hole 65 makes it possible to prevent the gas fuel from flowing in through the communication hole 65 and staying in that space of the double seat saddle 25 in which the seat cushion 56 is installed while ensuring a comfortable riding for a rider and air ventilation of the double seat saddle 25.
(7) Since the marginal projections 66 are formed on the lower edge of the communication hole 65 so as to protrude downward along the vehicle body, it is possible to prevent the gas fuel flowing along the seat base 55 of the double seat saddle 25 from flowing into the communication hole 65.

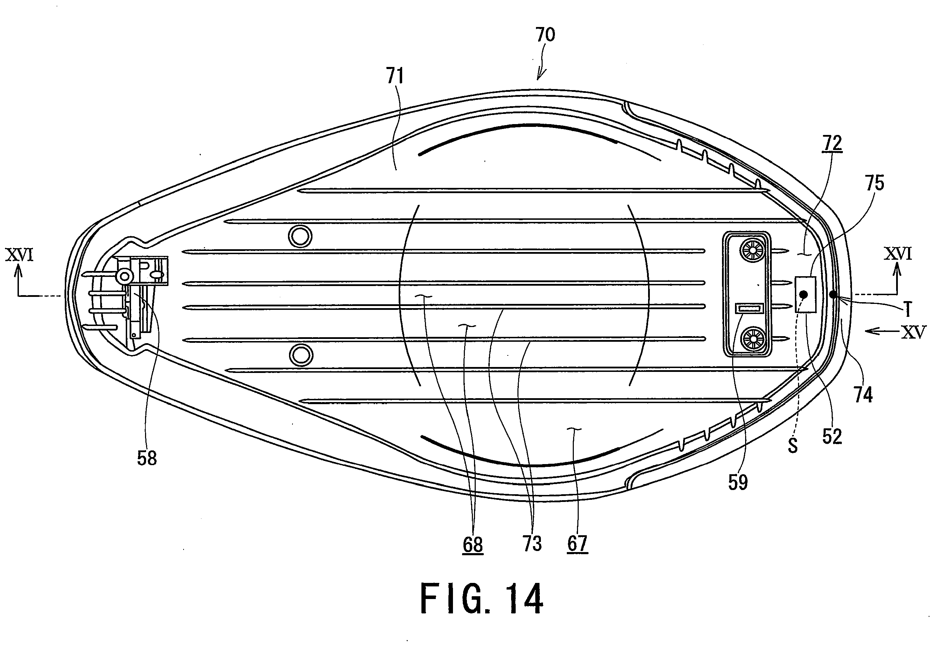

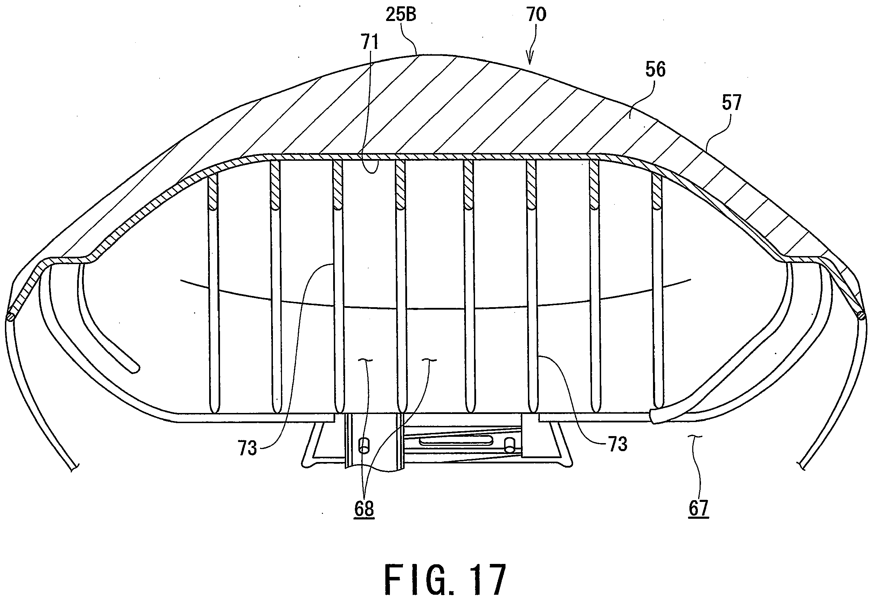

### [Second embodiment (Figs. 14 to 18)]

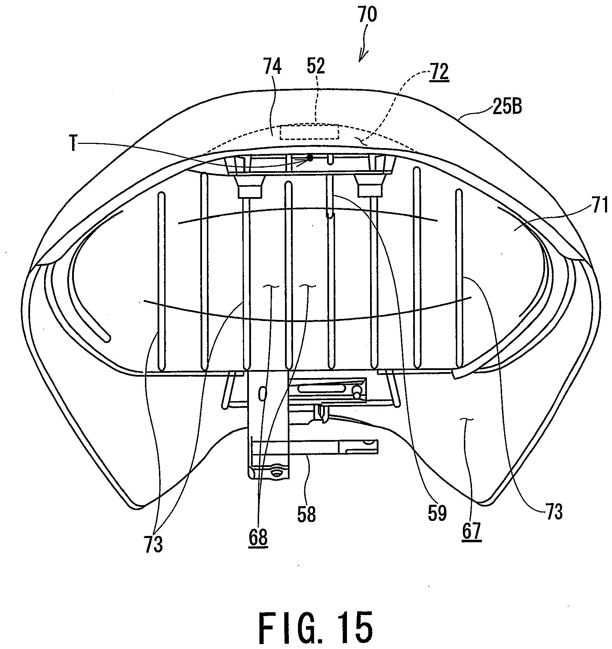

A second embodiment of the present invention will be described hereunder with reference to Figs. 14 to 18, in which Fig. 14 is a bottom view corresponding to Fig. 11 and showing a double seat saddle of a scooter-type motorcycle to which a seat structure for a small vehicle according to a second embodiment of the present invention is applied, and Fig. 15 is a view taken in a direction of arrow XV in Fig. 14.

In the second embodiment, components similar to those in the first embodiment are denoted by the same reference numerals as the corresponding components, and description thereof will be simplified or omitted herein.

A double seat saddle 70 according to the present embodiment differs from the double seat saddle 25 according to the first embodiment in that a depression (recessed portion) 72, which is provided on a seat base 71 as a bottom plate of the double seat saddle 70 and in which the gas fuel (gaseous hydrogen) stays, is installed near a rear end portion of the double seat saddle 70 and differs in that a gas fuel sensor 52 is fixedly attached to a lower surface of the seat base 71 in the depression 72.

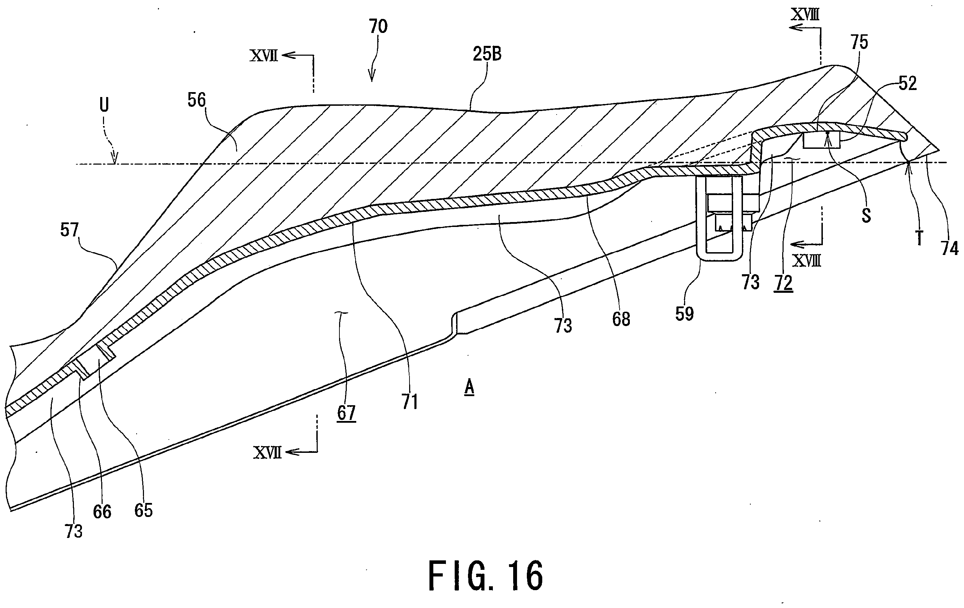

As shown in Fig. 16, the lower surface of the seat base 71 is configured to generally slope upward toward a rear end side of the double seat saddle 70 while the depression 72 is formed by being defined by a defining portion 74 formed by a rear end side portion of the seat base 71 and rear end side portions of the seat cushion 56 and seat skin 57 of the double seat saddle 70.

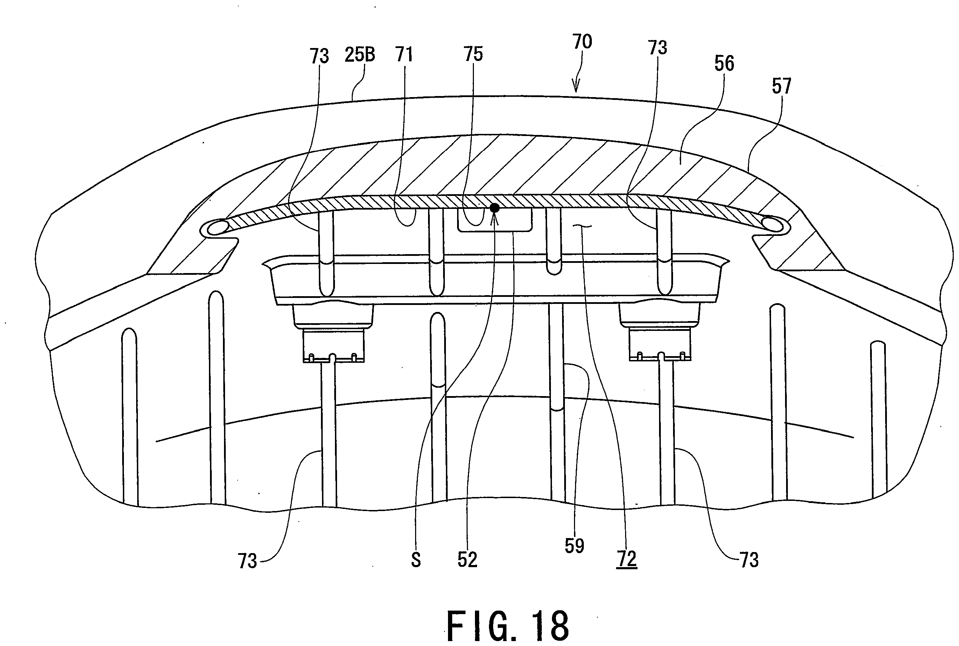

As shown in Figs. 16 and 18, the gas fuel sensor 52 is fixedly attached to the lower surface of the rear end side portion of the seat base 71, where the lower surface defines the depression 72 and is located in the depression 72. In particular, preferably, the gas fuel sensor 52 is fixedly attached to that portion (i.e., a sensor installation site 75) on the lower surface of the seat base 71 which contains the uppermost point S of the depression 72 located at approximate center position in the seat width direction (width direction of the vehicle) of the double seat saddle 70 so as to coincide with the uppermost point S in a plan view. Furthermore, at this time, the gas fuel sensor 52 is positioned above the horizontal line U passing through the point T which is the position of the uppermost point of the defining portion 74.

As shown in Figs. 14 to 17, on the lower surface of the seat base 71, a plurality of the reinforcement ribs 73 are arranged in the width direction of the double seat saddle 70 so as to protrude downward along the vehicle, and the reinforcement ribs 73 are formed so as to avoid a region in the seat width direction under the uppermost point S of the depression 72. That is, the reinforcement ribs 73 are not formed in that portion in the seat width direction on the lower surface of the seat base 71 which contains the uppermost point S of the depression 72 to which the gas fuel sensor 52 is fixedly attached. This allows the gas fuel to flow in the seat width direction in this region.

According to the configuration as described above, the present embodiment provides the following advantages or effects (8) to (10) in addition to the advantages similar to (1) to (7) achieved by the first embodiment described above.

(8) Since the depression 72, in which the leak gas fuel will stay, is formed in the rear end portion of the double seat saddle 70, a staying volume (hence, gas fuel staying amount) can be reduced. At the same time, the discharge of the gas fuel from the double seat saddle 70 is facilitated. In particular, when the depression 72 is provided in the rear end portion of the double seat saddle 70, since the double seat saddle of a motorcycle is generally configured to be high at the rear side, it is possible to further facilitate the discharge of the gas fuel from the depression 72.

(9) Since the lower surface of the seat base 71 of the double seat saddle 70 is configured to generally slope upward toward the rear end side of the double seat saddle 70, the gas fuel in the under-seat region A gathers into the depression 72 located substantially at the rear end of the double seat saddle 70 instead of wandering along the lower surface of the seat base 71. Therefore, since the gas fuel is not scattered and does not stay on the lower surface of the seat base 71, the leak (leaking or leaked) gas fuel can be detected reliably by the gas fuel sensor 52 disposed in the depression 72.

(10) The reinforcement ribs 73 are provided on the lower surface of the seat base 71 so as to protrude therefrom and are formed so as to avoid a region in the seat width direction under the uppermost point S of the depression 72. In addition, the gas fuel sensor 52 is fixedly attached to that portion (i.e., a sensor installation site 75) on the lower surface of the seat base 71 which contains the uppermost point S of the depression 72. Accordingly, the gas fuel can be caused to flow in the seat width direction (width direction of the vehicle) near the uppermost point S in the depression 72 of the seat base 71, and thus, easily flow to the gas fuel sensor 52, thereby ensuring the reliable detection of the leak gas fuel by the gas fuel sensor 52.

It is further to be noted that although the present invention has been described hereinabove with reference to the preferred embodiments, the present invention is not limited thereto and many other changes and modification or alternations may be made.

For example, in the double seat saddles 25 and 70, the reinforcement ribs 64 and 73 may be provided on the top (uppermost) surfaces of the seat bases 55 and 71. This arrangement will increase the rigidity of the seat bases 55 and 71 and improve the riding comfort of the double seat saddles 25 and 70 because of no location of any projection or recess which may cause gas fuel to stay on the lower surfaces of the seat bases 55 and 71.

Furthermore, although the gaseous hydrogen is used as a gas fuel in the described two embodiments, another gas fuel, such as methane gas, lower in specific gravity than air may be used alternatively.

In addition, although in the described two embodiments, a vehicle which uses a fuel cell stack as a gaseous fuel reactor has been described, the present invention is also applicable to a vehicle equipped with another type of apparatus which uses gas fuel. For example, the vehicle may be equipped with an internal combustion engine which uses a gas fuel lower in specific gravity than air.

Furthermore, although in the described two embodiments, a scooter-type motorcycle has been described as an example of a small vehicle, the present invention is also applicable to straddle-type vehicles such as motorcycles including other vehicle types and to carts and the like, provided an upper opening of a space, in which components related to a gaseous fuel reactor are accommodated, is covered by the lower surface of a seat.

## Claims

1. A small vehicle (10) with a seat structure, comprising:
a body frame,
a seat (25, 70) located above and supported by the body frame to be opened or closed;
a body cowl (28) covering an under-seat region (A) located under the seat;
a fuel tank (42) disposed in the under-seat region, supported by the body frame, and adapted to store a gas fuel lower in specific gravity than air,
a gaseous fuel reactor (41) disposed in the under-seat region to cause the gas fuel to undergo a chemical reaction; and
a gas fuel sensor (52) disposed in the under-seat region to detect gas fuel leaked from components related to the gaseous fuel reactor (41) including the gaseous fuel reactor and the fuel tank,
**characterized in that** the seat (25) includes an under-seat curved bent portion (67) surrounded at least by a seat base (55, 71) which is a bottom plate of the seat (25) so as to provide a larger space in the under-seat region, if an uppermost point of a defining portion (63) is designated as a point T, the defining portion (63) protruding downward along a vehicle body from the seat base (55, 71) to define a substantially dome-shaped depression (62, 72) in a part of the under-seat curved bent portion, the gas fuel sensor (52) is located in the depression (62, 72) and at least a part of the gas fuel sensor (52) is arranged above a horizontal line passing through the point T, a plurality of reinforcement ribs (64, 73) are disposed to a lower surface of the seat base (55, 71) so as to extend downward therefrom, the reinforcement ribs (64, 73) extend in parallel to each other without intersecting each other substantially in a front-rear direction of the seat (25, 70) to thereby define concave grooves (68) to the lower surface of the seat base (55, 71) so as to open downward , and the concave grooves defined by the reinforcement ribs extend substantially in the front-rear direction, the concave grooves (68) defined by the plural reinforcement ribs (64) are arranged in continuous to a location site of the gas fuel sensor (52).

2. The small vehicle according to claim 1, wherein the seat base includes a sensor location portion to which the gas fuel sensor is fixed.

3. The small vehicle (10) with a seat structure according to claim 1 or 2, wherein if an uppermost point of the depression (72) is designated as a point S, the gas fuel sensor (52) is positioned so as to coincide with the point S in a plan view of the vehicle (10).

4. The small vehicle (10) with a seat structure according to any one of claims 1 or 3, wherein if an uppermost point of the depression (72) is designated as a point S, the reinforcement ribs (73) provided on the lower surface of the seat base are formed so as to avoid a region in a vehicle width direction under the point S.

5. The small vehicle according to any one of claims 1 to 5, wherein the lower surface of the seat base is configured to generally slope upward toward a rear end side of the seat and the depression is provided in a vicinity of a rear end portion of the seat.

## Patentansprüche

1. Kleinfahrzeug (10) mit Sitzstruktur, umfassend:
einen Karosserierahmen;
einen Sitz (25, 70), angeordnet oberhalb des Karosserierahmens und von diesem gestützt, um sich öffnen und schließen zu lassen;
eine Karosseriehaube (28), die eine Untersitzzone (A) unterhalb des Sitzes abdeckt;
einen Kraftstofftank (42) in der Untersitzzone, abgestützt durch den Karosserierahmen und ausgebildet zum Speichern eines gasförmigen Kraftstoffs mit einer spezifischen Dichte geringer als Luft,
einen Gas-Kraftstoff-Reaktor (41), angeordnet in der Untersitzzone, um zu veranlassen, dass der gasförmige Kraftstoff einer chemischen Reaktion unterzogen wird; und
einen Gaskraftstoffsensor (52), angeordnet in der Untersitzzone zum Nachweisen von gasförmigem Kraftstoff, welches aus Komponenten in Verbindung mit dem Gaskraftstoffreaktor (41) ausgewichen ist, darunter der Gaskraftstoffreaktor und der Kraftstofftank,
**dadurch gekennzeichnet, dass** der Sitz (25) einen gekrümmten gebogenen Abschnitt (67) unterhalb des Sitzes enthält, umgeben von mindestens einer Sitzbasis (55, 71), die eine Bodenplatte des Sitzes (25) ist, um dadurch einen größeren Raum in der Untersitzzone zu schaffen, wenn ein höchster Punkt eines definierten Abschnitts (63) als Punkt T bezeichnet wird, der Definierabschnitt (63) entlang der Fahrzeugkarosserie von der Sitzbasis (55, 71) nach unten ragt, um eine im wesentlichen domförmige Vertiefung (62, 72) in einem Teilbereich des gekrümmten gebogenen Abschnitts unter dem Sitz zu definieren, der Gaskraftstoffsensor (52) sich in der Vertiefung (62, 72) befindet und mindestens ein Teil des Gaskraftstoffsensors (52) oberhalb einer horizontalen Linie angeordnet ist, die durch den Punkt T verläuft, mehrere Verstärkungsrippen (64, 73) an der Unterseite der Sitzbasis (55, 71) angeordnet sind, um sich von dieser nach unten zu erstrecken, wobei die Verstärkungsrippen (64, 73) sich parallel zueinander ohne einander zu schneiden im wesentlichen in Längsrichtung des Sitzes (25, 70) verlaufen, um dadurch konkave Nuten (68) an der Unterseite der Sitzbasis (55, 71) in nach unten geöffneter Weise zu definieren, und die konkaven Nuten, die durch die Verstärkungsrippen definiert sind, sich im wesentlichen in Längsrichtung erstrecken, wobei die durch die mehreren Verstärkungsrippen (64) definierten konkaven Nuten (68) in kontinuierlicher Weise zu einer Anordnungsstelle des Gaskraftstoffsensors (52) angeordnet sind.

2. Kleinfahrzeug nach Anspruch 1,
bei dem die Sitzbasis einen Sensor-Platzierungsabschnitt enthält, an dem der Gaskraftstoffsensor befestigt ist.

3. Kleinfahrzeug (10) mit einer Sitzstruktur nach Anspruch 1 oder 2,
bei dem, wenn ein höchster Punkt der Vertiefung (72) als Punkt S bezeichnet wird, der Gaskraftstoffsensor (52) derart positioniert ist, dass er in einer Draufsicht des Fahrzeugs (10) mit dem Punkt S zusammenfällt.

4. Kleinfahrzeug (10) mit einer Sitzstruktur nach einem der Ansprüche 1 bis 3,
bei dem, wenn ein höchster Punkt der Vertiefung (72) als Punkt S definiert ist, die an der Unterseite der Sitzbasis vorhandenen Verstärkungsrippen (73) derart geformt sind, dass eine Zone in Fahrzeugbreitenrichtung unterhalb des Punkts S ausgespart bleibt.

5. Kleinfahrzeug nach einem der Ansprüche 1 bis 4,
bei dem die Unterseite der Sitzbasis derart konfiguriert ist, dass sie sich in Richtung der hinteren Endseite des Sitzes im wesentlichen nach oben ansteigt, und die Vertiefung in einer Nähe des hinteren Endabschnitts des Sitzes vorgesehen ist.

## Revendications

1. Petit véhicule (10) avec une structure de siège, comprenant :
une ossature de carrosserie ;
un siège (25, 70) situé au-dessus de l'ossature de carrosserie, et supportée par celle-ci de manière à s'ouvrir ou se fermer ;
un capotage de carrosserie (28) couvrant une région sous le siège (A) située sous le siège ;
un réservoir à combustible (42) disposé dans la région sous le siège, supporté par l'ossature de carrosserie et apte à stocker un combustible gazeux plus faible que l'air en densité spécifique ;
un réacteur à combustible gazeux (41) disposé dans la région sous le siège afin de faire subir une réaction chimique au combustible gazeux, et
un capteur de combustible gazeux (52) disposé dans la région sous le siège afin de détecter une fuite de combustible gazeux à partir des composants liés au réacteur à combustible gazeux (41) incluant le réacteur à combustible gazeux et le réservoir à combustible,
**caractérisé en ce que** le siège (25) inclut une portion recourbée sous le siège (67) entourée d'au moins une base de siège (55, 71), laquelle est une plaque de fond du siège (25) de manière à fournir un espace plus grand dans la région sous le siège, si un point le plus haut d'une portion de définition (63) est désigné comme un point T, la portion de définition (63) faisant saillie vers le bas le long d'une carrosserie de véhicule à partir de la base de siège (55, 71) afin de définir un creux en grande partie en forme de dôme (62, 72) dans une partie de la portion recourbée sous le siège, le capteur de combustible gazeux (52) se trouve dans le creux (62, 72) et au moins une partie du capteur de combustible gazeux (52) est agencée au-dessus d'une ligne horizontale passant à travers le point T, une pluralité de nervures de renfort (64, 73) sont disposées vers une surface inférieure de la base de siège (55, 71) de manière à s'étendre vers le bas à partir de celle-ci, les nervures de renfort (64,73) s'étendent parallèlement les unes aux autres sans se croiser en grande partie dans une direction avant-arrière du siège (25, 70) de manière à définir ainsi des rainures concaves (68) avec la surface inférieure de la base de siège (55, 71) de manière à ouvrir vers le bas, et les rainures concaves définies par les nervures de renfort s'étendent en grande partie dans la direction avant-arrière, et les rainures concaves (68) définies par les nervures de renfort (64) sont agencées en continu jusqu'à un site d'emplacement du capteur de combustible gazeux (52).

2. Petit véhicule selon la revendication 1, dans lequel la base de siège inclut une portion d'emplacement de capteur sur laquelle le capteur de combustible gazeux est fixé.

3. Petit véhicule (10) selon la revendication 1 ou 2, dans lequel si un point le plus haut du creux (72) est désigné comme un point S, le capteur de combustible gazeux (52) est positionné de manière à coïncider avec le point S dans une vue de dessus du véhicule (10).

4. Petit véhicule (10) selon l'une quelconque des revendications 1 à 3, dans lequel si un point le plus haut du creux (72) est désigné comme un point S, les nervures de renfort (73) prévues sur la surface inférieure de la base de siège sont formées de manière à éviter une région dans une direction de largeur de véhicule sous le point S.

5. Petit véhicule selon l'une quelconque des revendications 1 à 4, dans lequel la surface inférieure de la base de siège est configurée pour former généralement une pente ascendante vers un côté d'extrémité arrière du siège, et le creux est prévu dans un voisinage d'une portion d'extrémité arrière du siège.
